# EUROPEAN PATENT APPLICATION

(11) **EP 2 357 586 A2**
(43) Date of publication of application: **17.08.2011**
(21) Application number: 11153755.1
(22) Date of filing: 08.02.2011
(51) Int. Cl.: G06F 21/00

(54) **Single hardware platform with multiple software redundancy**

(30) Priority: 16.02.2010 US 658907
(71) Applicant: Honeywell International Inc., Morristown, NJ 07962 (US)
(72) Inventor: Markham, Thomas R., Fridley, MN 55432-4958 (US)
(74) Representative: Buckley, Guy Julian

(57) **Abstract**

A process detects an attack on a software system, eradicates the attack, automatically loads software into the software system in response to the attack, and executes one or more of a reboot of the software system or a boot of the loaded software. The loaded software comprises a substantially similar functionality of at least a portion of the software system and a different implementation of the functionality of the portion of the software system.

## Description

### Technical Field

The present disclosure relates to computer system security, and in an embodiment, but not by way of limitation, computer system security using a single hardware platform but multiple software redundancy.

### Background

Computer systems can be vulnerable to cyber attacks if the software or firmware in such systems contains flaws or weaknesses that can be exploited by an attacker. The attacker could be a live human attempting to access the system, or it could be a piece of malicious software (e.g., a worm). When a computer is found to be vulnerable, it typically requires a human to detect the attack or intrusion, clean up the system (remove the hostile code that may have been loaded), and in some instances, load a patch or antivirus update to prevent the reoccurrence of the attack. This type of clean up is slow, requires taking the computer offline for a significant amount of time, and typically requires a human to be involved.

Any computer system is vulnerable to an attack. This even includes embedded computers such as those used in avionics systems, process control systems and Supervisory Control and Data Acquisition (SCADA). A particular problem with embedded systems however is that they typically operate in environments where the slow human procedures outlined above are not practical.

The subject matter described in this background section could be pursued, but it has not necessarily been previously conceived or pursued. Therefore, unless otherwise indicated herein, the subject matter described in this background section is not prior art to the claims in this application and is not admitted to be prior art by inclusion in this background section.

### Brief Description of the Drawings

**FIG. 1** is a diagram of a computer system configured to detect and respond to attacks or intrusions.
**FIG. 2** is a flowchart of a process for detecting and responding to attacks on or intrusions into a computer system.
**FIG. 3** is a block diagram of a computer system upon which one or more embodiments of the present disclosure can operate.

### Detailed Description

In the following detailed description, reference is made to the accompanying drawings that show, by way of illustration, specific embodiments in which the invention may be practiced. These embodiments are described in sufficient detail to enable those skilled in the art to practice the invention. It is to be understood that the various embodiments of the invention, although different, are not necessarily mutually exclusive. Furthermore, a particular feature, structure, or characteristic described herein in connection with one embodiment may be implemented within other embodiments without departing from the scope of the invention. In addition, it is to be understood that the location or arrangement of individual elements within each disclosed embodiment may be modified without departing from the scope of the invention. The following detailed description is, therefore, not to be taken in a limiting sense, and the scope of the present invention is defined only by the appended claims, appropriately interpreted, along with the full range of equivalents to which the claims are entitled. In the drawings, like numerals refer to the same or similar functionality throughout the several views.

Embodiments of the invention include features, methods, or processes embodied within machine-executable instructions provided by a machine-readable medium. A machine-readable medium includes any mechanism which provides (i.e., stores and/or transmits) information in a form accessible by a machine (e.g., a computer, a network device, a personal digital assistant, manufacturing tool, any device with a set of one or more processors, *etc*.). In an exemplary embodiment, a machine-readable medium includes volatile and/or non-volatile media (e.g., read only memory (ROM), random access memory (RAM), magnetic disk storage media, optical storage media, flash memory devices, *etc*.), as well as electrical, optical, acoustical or other form of propagated signals (e.g., carrier waves, infrared signals, digital signals, *etc*.)). Consequently, a machine-readable medium can be either tangible or intangible in nature.

Such instructions are utilized to cause a general or special purpose processor, programmed with the instructions, to perform methods or processes of the embodiments of the invention. Alternatively, the features or operations of embodiments of the invention are performed by specific hardware components which contain hard-wired logic for performing the operations, or by any combination of programmed data processing components and specific hardware components. Embodiments of the invention include digital/analog signal processing systems, software, data processing hardware, data processing system-implemented methods, and various processing operations, further described herein.

One or more figures show block diagrams of systems and apparatus of embodiments of the invention. One or more figures show flow diagrams illustrating systems and apparatus for such embodiments. The operations of the flow diagrams will be described with references to the systems/apparatuses shown in the block diagrams. However, it should be understood that the operations of the flow diagrams could be performed by embodiments of systems and apparatus other than those discussed with reference to the block diagrams, and embodiments discussed with reference to the systems/apparatus could perform operations different than those discussed with reference to the flow diagrams.

It is known to try to detect, respond to, and prevent attacks on and intrusions into computer systems. One response could be to reboot the computer system. This could be done automatically by using a watchdog timer. One or more embodiments in this disclosure extend such preventative measures to provide for rebooting a different version of the executing software, or rebooting completely different software that nonetheless has the same or similar functionality as the software that suffered the attack. The rebooting can be based upon either a watchdog timer or an intrusion/fault detection mechanism. The approaches disclosed herein incorporate security instead of just relating to and dealing with hardware related faults. In one or more embodiments, the inventor has realized that an intrusion detection technique in an embedded system can take advantage of the embedded system's relatively stable environment to provide more effective detection.

In an embodiment, in response to a cyber attack, a computer system automatically detects the attack or intrusion, ejects any intruder associated with the attack (e.g., kills the process, terminates the attacker's Telnet session, *etc*.), replaces the vulnerable software with software that has a low probability of having the same flaw or weakness as the vulnerable software, and brings the system back online in a timely manner.

One or more embodiments provide a means for replacing the software by having a locally accessible copy. That is, the computer does not require a human to load new software, nor does it require an active internet connection. This can be useful for embedded systems because they often operate unattended (e.g., in a spacecraft or electrical substation), and access to the internet may consequently be limited. The replacement software may be stored in read only memory (ROM), on a local hard disk, on a flash drive, or on or in any other means of providing accessible storage. The replacement software is specifically designed to be functionally equivalent but implemented differently. This ensures that the replacement software continues to provide critical services while increasing the probability that the new software does not share the same vulnerability (flaw or weakness) as the original software. This is beneficial to embedded systems, especially those which are unmanned and may not have an operator nearby to detect and respond to the event.

One or more embodiments may be applied to systems with multiple software components by replacing the single flawed component. For example, if a system implementation includes a network interface that implements the Transmission Control Protocol (TCP), and the system detects that a segmentation fault occurred due to a problem in the TCP processing software, the system could replace the original TCP software module with a replacement module. By applying appropriate software diversity techniques, there could be a high probability that the replacement module would not re-instantiate the same flaw.

In an embodiment, since many embedded devices or systems are dedicated to a single function, it is possible to develop cyber contingency plans that are embedded into nodes. These cyber contingency plans would be instantiated as an alternate software load that is invoked automatically upon an attack or intrusion. An example would be an islanding plan for an electrical substation.

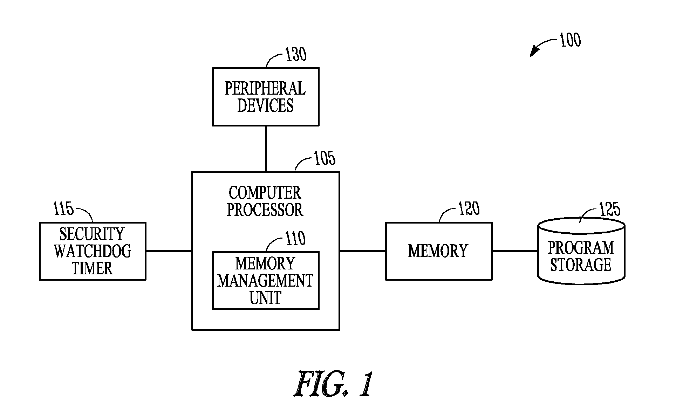

Each embodiment is dependent upon the specific computer and its environment. However, a generic embodiment can be described as follows, and is illustrated in **FIG.1**. The system **100** includes a computer processor **105**. The computer processor 105 executes instructions and may contain mechanisms to detect attacks or intrusions. For example, a memory management unit **110** may detect a segmentation fault or an attempt to execute a portion of memory identified as read only. An integrated security/watch dog timer **115** detects when the processor **105** is no longer executing the code as expected. An intrusion detection mechanism can generally function by identifying a signature of a known attacker or malicious piece of software, and/or by detecting an anomaly-based intrusion such as identifying different behavior---for example, attempting to write to Read Only memory. This deviation from expectation could be triggered by intrusion detection of failure to reset the watchdog timer **115**. The timer **115** has the ability to set a nonvolatile flag indicating the type of fault or error caused by the detected intrusion, and it initiates a reset of the system. Memory **120** stores the code to be executed. Memory **120** may be static RAM, dynamic RAM, or some other memory mechanism (e.g., a FLASH memory) capable of storing code to be executed. Program storage **125** provides a mechanism for storing the pieces of software to be executed. Program storage **125** includes the primary software as well as one or more instances of backup software. Each instance of backup software would be unique so that there is a low probability that two instances would contain the same flaw. The program storage **125** could be a hard disk, CD, DVD, FLASH memory, ROM, or even a nearby device supporting a bootstrap protocol. The system 100 will typically consist of other components or peripherals **130** to support I/O, perform sensing, or support other functions.

When the system 100 is initially booted, it loads the primary executable software. This is typically the operating system (real time OS, executive OS, or a richer OS) and one or more applications. The boot process initializes the integrated security/watch dog timer **115**. The system **100** then runs and provides the service for which it was designed. As the system **100** executes, the security monitor and watch dog timer **115** are continuously verifying the integrity of the system. Assuming a flaw or attack occurs, the integrated security/watch dog timer **115** sets a flag indicating the version of the software which experienced the flaw. The timer **115** then forces a reboot. When the system 100 reboots, it reads the flag(s) set by the integrated security/watch dog timer 115 and selects the software to run based upon the flags. The system 100 then boots using the newly loaded software and re-establishes itself within the larger system context—for example, it may re-establish network connections or update operating parameters. The system **100** described above is simplified in order to explain the concept. There are many possible variations on any such system.

As noted above, in an embodiment, the entire software load is replaced upon reboot---that is, the OS and all applications are replaced. However, in another embodiment, the approach is implemented such that a finer granularity is supported. In some instances, such as a buffer overflow attack against a particular application, only that application needs to be restarted using replacement software---that is, a partial reboot. This allows other applications to continue operating and allows a more rapid recovery. Moreover, the suspect software modules (e.g., a DLL) could be replaced based upon the flags set by the integrated security/watch dog timer **115**.

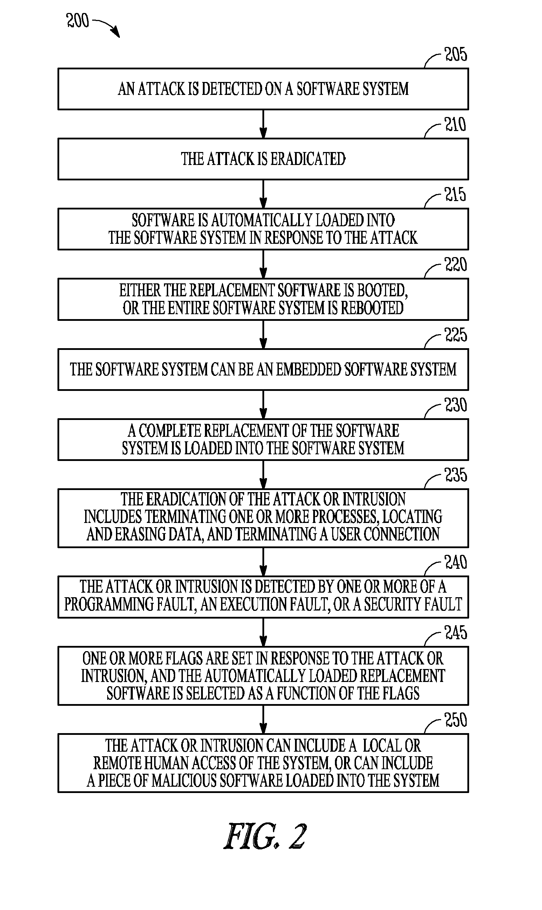

**FIG. 2** is a flowchart of an example process **200** that detects and responds to attacks on a computer system. **FIG. 2** includes a number of process blocks **205 - 250.** Though arranged serially in the example of **FIG. 2****,** other examples may reorder the blocks, omit one or more blocks, and/or execute two or more blocks in parallel using multiple processors or a single processor organized as two or more virtual machines or sub-processors. Moreover, still other examples can implement the blocks as one or more specific interconnected hardware or integrated circuit modules with related control and data signals communicated between and through the modules. Thus, any process flow is applicable to software, firmware, hardware, and hybrid implementations.

Referring now specifically to **FIG. 2**, at **205**, an attack is detected on a software system. As noted above, this attack could be a live human trying to hack into the software system, or a piece of malicious software. The attack may or may not result in an actual intrusion into the software system. At **210**, the attack or intrusion is eradicated. This eradication could include terminating the attacker's connection, deleting the malicious software, or some other response. At **215**, software is automatically loaded into the software system in response to the attack. This loaded software is replacement software. The replacement software includes the substantially similar functionality of at least a portion of the software system and a different implementation of the functionality of the portion of the software system. The replacement software can be locally available (as contrasted with loaded from a remote site via a network connection). At **220**, either the replacement software is booted, or the entire software system is rebooted.

As noted at **225**, the software system can be an embedded software system. At **230**, a complete replacement of the software system is loaded into the software system. At **235**, the eradication of the attack or intrusion includes terminating one or more processes, locating and erasing data, and terminating a user connection. At **240**, the attack or intrusion is detected by one or more of a programming fault, an execution fault, or a security fault. At **245**, one or more flags are set in response to the attack or intrusion, and the automatically loaded replacement software is selected as a function of the flags. At **250**, it is noted that the attack or intrusion can include a local or remote human access of the system, or can include a piece of malicious software loaded into the system.

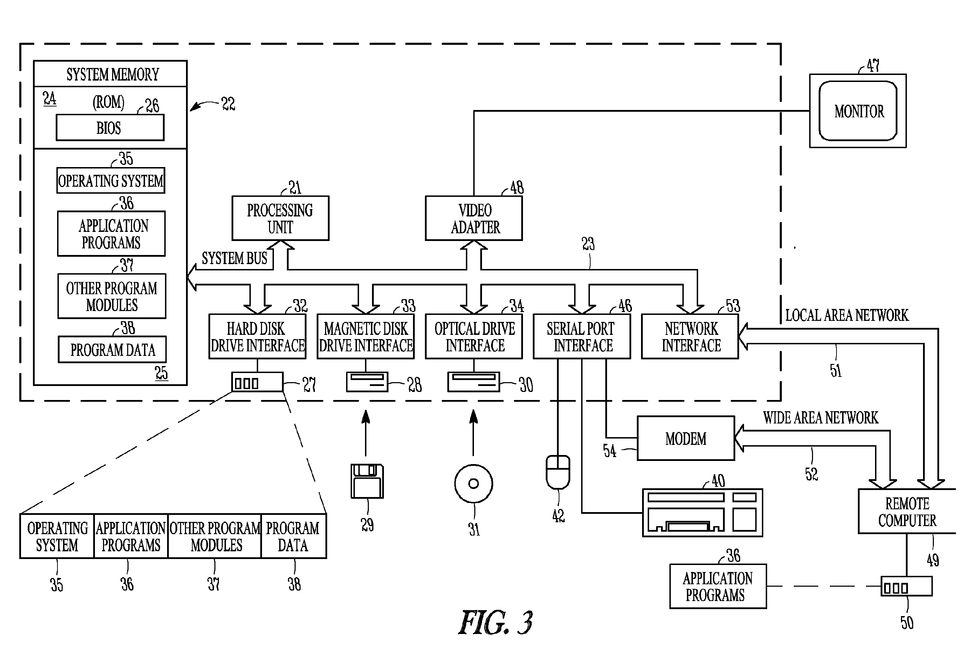

**FIG. 3** is an overview diagram of a hardware and operating environment in conjunction with which embodiments of the invention may be practiced. The description of FIG. 3 is intended to provide a brief, general description of suitable computer hardware and a suitable computing environment in conjunction with which the invention may be implemented. In some embodiments, the invention is described in the general context of computer-executable instructions, such as program modules, being executed by a computer, such as a personal computer. Generally, program modules include routines, programs, objects, components, data structures, etc., that perform particular tasks or implement particular abstract data types.

Moreover, those skilled in the art will appreciate that the invention may be practiced with other computer system configurations, including hand-held devices, multiprocessor systems, microprocessor-based or programmable consumer electronics, network PCs, minicomputers, mainframe computers, and the like. The invention may also be practiced in distributed computer environments where tasks are performed by I/0 remote processing devices that are linked through a communications network. In a distributed computing environment, program modules may be located in both local and remote memory storage devices.

In the embodiment shown in **FIG. 3**, a hardware and operating environment is provided that is applicable to any of the servers and/or remote clients shown in the other Figures.

As shown in **FIG. 3****,** one embodiment of the hardware and operating environment includes a general purpose computing device in the form of a computer **20** (e.g., a personal computer, workstation, or server), including one or more processing units **21**, a system memory **22**, and a system bus 23 that operatively couples various system components including the system memory **22** to the processing unit **21**. There may be only one or there may be more than one processing unit **21**, such that the processor of computer **20** comprises a single central-processing unit (CPU), or a plurality of processing units, commonly referred to as a multiprocessor or parallel-processor environment. A multiprocessor system can include cloud computing environments. In various embodiments, computer **20** is a conventional computer, a distributed computer, or any other type of computer.

The system bus **23** can be any of several types of bus structures including a memory bus or memory controller, a peripheral bus, and a local bus using any of a variety of bus architectures. The system memory can also be referred to as simply the memory, and, in some embodiments, includes read-only memory (ROM) **24** and random-access memory (RAM) **25**. A basic input/output system (BIOS) program **26**, containing the basic routines that help to transfer information between elements within the computer **20**, such as during start-up, may be stored in ROM **24**. The computer **20** further includes a hard disk drive **27** for reading from and writing to a hard disk, not shown, a magnetic disk drive **28** for reading from or writing to a removable magnetic disk **29**, and an optical disk drive **30** for reading from or writing to a removable optical disk **31** such as a CD ROM or other optical media.

The hard disk drive **27**, magnetic disk drive **28**, and optical disk drive **30** couple with a hard disk drive interface **32**, a magnetic disk drive interface **33**, and an optical disk drive interface **34**, respectively. The drives and their associated computer-readable media provide non volatile storage of computer-readable instructions, data structures, program modules and other data for the computer **20**. It should be appreciated by those skilled in the art that any type of computer-readable media which can store data that is accessible by a computer, such as magnetic cassettes, flash memory cards, digital video disks, Bernoulli cartridges, random access memories (RAMs), read only memories (ROMs), redundant arrays of independent disks (e.g., RAID storage devices) and the like, can be used in the exemplary operating environment.

A plurality of program modules can be stored on the hard disk, magnetic disk **29**, optical disk **31**, ROM **24**, or RAM **25**, including an operating system **35**, one or more application programs **36**, other program modules **37**, and program data **38**.

A user may enter commands and information into computer **20** through input devices such as a keyboard **40** and pointing device **42**. Other input devices (not shown) can include a microphone, joystick, game pad, satellite dish, scanner, or the like. These other input devices are often connected to the processing unit **21** through a serial port interface **46** that is coupled to the system bus **23**, but can be connected by other interfaces, such as a parallel port, game port, or a universal serial bus (USB). A monitor **47** or other type of display device can also be connected to the system bus **23** via an interface, such as a video adapter **48**. The monitor **40** can display a graphical user interface for the user. In addition to the monitor **40**, computers typically include other peripheral output devices (not shown), such as speakers and printers.

The computer **20** may operate in a networked environment using logical connections to one or more remote computers or servers, such as remote computer **49**. These logical connections are achieved by a communication device coupled to or a part of the computer **20**; the invention is not limited to a particular type of communications device. The remote computer **49** can be another computer, a server, a router, a network PC, a client, a peer device or other common network node, and typically includes many or all of the elements described above I/0 relative to the computer **20**, although only a memory storage device **50** has been illustrated. The logical connections depicted in **FIG. 3** include a local area network (LAN) **51** and/or a wide area network (WAN) 52. Such networking environments are commonplace in office networks, enterprise-wide computer networks, intranets and the internet, which are all types of networks.

When used in a LAN-networking environment, the computer **20** is connected to the LAN **51** through a network interface or adapter **53**, which is one type of communications device. In some embodiments, when used in a WAN-networking environment, the computer **20** typically includes a modem **54** (another type of communications device) or any other type of communications device, e.g., a wireless transceiver, for establishing communications over the wide-area network **52**, such as the internet. The modem **54**, which may be internal or external, is connected to the system bus **23** via the serial port interface **46**. In a networked environment, program modules depicted relative to the computer **20** can be stored in the remote memory storage device **50** of remote computer, or server **49**. It is appreciated that the network connections shown are exemplary and other means of, and communications devices for, establishing a communications link between the computers may be used including hybrid fiber-coax connections, T1-T3 lines, DSL's, OC-3 and/or OC-12, TCP/IP, microwave, wireless application protocol, and any other electronic media through any suitable switches, routers, outlets and power lines, as the same are known and understood by one of ordinary skill in the art.

Thus, an example system, method and machine readable medium for detecting and responding to attacks on or intrusions into a computer software system has been described. Although specific example embodiments have been described, it will be evident that various modifications and changes may be made to these embodiments without departing from the broader scope of the invention. Accordingly, the specification and drawings are to be regarded in an illustrative rather than a restrictive sense. The accompanying drawings that form a part hereof, show by way of illustration, and not of limitation, specific embodiments in which the subject matter may be practiced. The embodiments illustrated are described in sufficient detail to enable those skilled in the art to practice the teachings disclosed herein. Other embodiments may be utilized and derived therefrom, such that structural and logical substitutions and changes may be made without departing from the scope of this disclosure. This Detailed Description, therefore, is not to be taken in a limiting sense, and the scope of various embodiments is defined only by the appended claims, along with the full range of equivalents to which such claims are entitled.

Such embodiments of the inventive subject matter may be referred to herein, individually and/or collectively, by the term "invention" merely for convenience and without intending to voluntarily limit the scope of this application to any single invention or inventive concept if more than one is in fact disclosed. Thus, although specific embodiments have been illustrated and described herein, it should be appreciated that any arrangement calculated to achieve the same purpose may be substituted for the specific embodiments shown. This disclosure is intended to cover any and all adaptations or variations of various embodiments. Combinations of the above embodiments, and other embodiments not specifically described herein, will be apparent to those of skill in the art upon reviewing the above description.

The Abstract is provided to comply with 37 C.F.R. §1.72(b) and will allow the reader to quickly ascertain the nature and gist of the technical disclosure. It is submitted with the understanding that it will not be used to interpret or limit the scope or meaning of the claims.

In the foregoing description of the embodiments, various features are grouped together in a single embodiment for the purpose of streamlining the disclosure. This method of disclosure is not to be interpreted as reflecting that the claimed embodiments have more features than are expressly recited in each claim. Rather, as the following claims reflect, inventive subject matter lies in less than all features of a single disclosed embodiment. Thus the following claims are hereby incorporated into the Description of the Embodiments, with each claim standing on its own as a separate example embodiment.

## Claims

1. A computerized process comprising:
detecting, using a computer processor (105), an attack on a software system; (205)
eradicating, using the computer processor, the attack; (210)
automatically loading, using the computer processor, software into the software system in response to the attack; (215) and
executing, using the computer processor, one or more of a reboot of the software system or a boot of the loaded software; (220)
wherein the loaded software comprises a substantially similar functionality of at least a portion of the software system and a different implementation of the functionality of the portion of the software system. (220)

2. The computerized process of claim 1, wherein the software system comprises an embedded software system. (225)

3. The computerized process of claim 1, comprising loading a complete replacement of the software system. (230)

4. The computerized process of claim 1, wherein the eradicating comprises terminating one or more processes, locating and erasing data, and terminating a user connection. (235)

5. The computerized process of claim 1, comprising setting one or more flags in response to the attack, and selecting the automatically loaded software as a function of the flags. (245)

6. A machine-readable medium storing instructions, which, when executed by a processor, cause the processor to perform a process comprising: (120, 125)
detecting an attack on a software system; (205)
eradicating the attack; (210)
automatically loading software into the software system in response to the attack; (215) and
executing one or more of a reboot of the software system or a boot of the loaded software; (220)
wherein the loaded software comprises a substantially similar functionality of at least a portion of the software system and a different implementation of the functionality of the portion of the software system. (220)

7. The machine-readable medium of claim 6, comprising instructions for loading a complete replacement of the software system. (230)

8. The machine-readable medium of claim 6, wherein the eradicating comprises terminating one or more processes, locating and erasing data, and terminating a user connection. (235)

9. A system comprising:
one or more computer processors configured to: (105)
detect an attack on a software system; (205)
eradicate the attack; (210)
automatically load software into the software system in response to the attack; (215) and
execute one or more of a reboot of the software system or a boot of the loaded software; (220)
wherein the loaded software comprises a substantially similar functionality of at least a portion of the software system and a different implementation of the functionality of the portion of the software system. (220)

10. The system of claim 9, comprising one or more computer processors configured to set one or more flags in response to the attack, and to select the automatically loaded software as a function of the flags. (245)
